(19) Europäisches Patentamt
European Patent Office
Office européen des brevets

(11) Veröffentlichungsnummer : **0 076 393**
**B1**

(12) **EUROPÄISCHE PATENTSCHRIFT**

(45) Veröffentlichungstag der Patentschrift : **12.02.86**

(51) Int. Cl.⁴ : **C 03 C 11/00**

(21) Anmeldenummer : **82108263.3**

(22) Anmeldetag : **08.09.82**

(54) **Verfahren zur Herstellung von Schaumglasprodukten.**

(30) Priorität : **17.09.81 DE 3136888**

(43) Veröffentlichungstag der Anmeldung : **13.04.83 Patentblatt 83/15**

(45) Bekanntmachung des Hinweises auf die Patenterteilung : **12.02.86 Patentblatt 86/07**

(84) Benannte Vertragsstaaten : **AT BE CH DE FR GB IT LI LU NL SE**

(56) Entgegenhaltungen :
**DE-A- 1 944 523**
**DE-A- 2 043 238**
**FR-A- 2 081 104**
**GB-A- 1 550 184**

(73) Patentinhaber : **Henkel Kommanditgesellschaft auf Aktien**
**Postfach 1100 Henkelstrasse 67**
**D-4000 Düsseldorf-Holthausen (DE)**

(72) Erfinder : **Schwab, Werner, Dr.**
**Bachstrasse 76**
**D-4018 Langenfeld (DE)**
Erfinder : **Volgnandt, Peter, Dr.**
**Zwickauer Strasse 37**
**D-4000 Düsseldorf 12 (DE)**

**EP 0 076 393 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Gegenstand der Erfindung ist ein vereinfachtes Verfahren zur Herstellung von Schaumglasprodukten durch thermische Behandlung von Alkalisilikaten oder Alkalihydroxiden sowie Flugstaub oder Flugasche mit einem $SiO_2$-Gehalt von 89 bis 98 Gewichtsprozent.

Verfahren zur Herstellung von Formkörpern, die ganz oder teilweise aus Wasserglasschaum bestehen und denen andere Feststoffe wie Kaolin, Glimmer and Talkum zugesetzt sind, wobei die Gemische bei Temperaturen von 480 bis 500 °C verschäumt werden, sind bereits bekannt. Auch hat man schon Schaumstoffe hergestellt, die außer Wasserglas Flugstaub mit einem hohen $SiO_2$-Gehalt, Aluminiumpulver sowie Aluminiumphosphat enthalten und zu feuerfesten Produkten bei Temperaturen von etwa 400 °C verschäumt werden.

Gegenstand der DE-OS-1 944 523 ist ein Verfahren zur Herstellung von Schaumglas durch thermische Behandlung einer Mischung bestehend aus glasigem, amorphem Mineralpulver, zum Beispiel « Ferrosilicium-Ofenrauch », Metalloxiden und Wasserglas. Diesem Gemisch werden vorzugsweise gasbildende Stoffe sowie andere « Kiesel-haltige » Füllmittel beigefügt. Beim Erhitzen auf 250 bis 400 °C bildet sich ein heterogenes Produkt ; homogene Produkte entstehen erst beim Erhitzen auf 800 °C. Zur Bildung der nichtgranularen Schaumglasprodukte ist ein 10 bis 20 %iger Metalloxidgehalt erforderlich, der das Entstehen der Gasphase beschleunigt bzw. intensiviert.

Aus der GB-A-1 550 184 sind Produkte bekannt, die bei der thermischen Behandlung einer Mischung aus Flugasche und Wasserglas resultieren. Die verwendeten Flugaschen fallen als Verbrennungsrückstand in mit Kohlestaub befeuerten Kraftwerken an und enthalten im Gegensatz zu Flugstäuben und -aschen, die bei der Silicium- oder Ferrosiliciumherstellung anfallen, kein amorphes $SiO_2$.

Auch für das in der DE-OS-2 043 238 vorgeschlagene Verfahren zur Herstellung geschäumter Formkörper finden Flugaschen aus Kraftwerken Verwendung. Bei diesem Verfahren, bei dem durch Erhärten einer Mischung bestehend aus Kraftwerksflugasche, Wasserglas und Schaummittel die gewünschten Formkörper erhalten werden, ist die Zugabe eines Schaumbildners unumgänglich.

Gegenstand der vorliegenden Erfindung ist ein Verfahren zur Herstellung homogener Schaumglasgranulate durch thermische Behandlung von Flugstäuben bzw. Flugaschen, die bei der Silicium- oder Ferrosiliciumherstellung anfallen, sowie wäßrigen alkalischen Lösungen, ggf. wäßrigen Alkalimetallsilikatlösungen, das dadurch gekennzeichnet ist, daß man

a) ein Gemisch, bestehend aus Flugstaub oder Flugasche mit einem $SiO_2$-Gehalt von 89 bis 98 Gew.-%, einer wäßrigen Alkalimetallsilikat- und/oder einer wäßrigen Alkalimetallhydroxid-Lösung und gegebenenfalls Wasser, herstellt,

b) wobei die molare Zusammensetzung des Gemisches der allgemeinen Formel I

$$(Me_2O) \cdot (SiO_2)_n \cdot (H_2O)_m \qquad (I)$$

entspricht, in welcher Me = Natrium oder Kalium, n = 5 bis 8 und m = 22 bis 45 bedeuten,

c) das Gemisch durch Erhitzen auf Temperaturen bis 100 °C härtet,

d) die erkaltete, erhärtete Masse zerkleinert und Teilchen einer Größe unter 1,6 mm sowie über 3,15 mm absiebt und

e) anschließend das erhaltene Produkt durch erneutes Erhitzen auf Temperaturen im Bereich von 150 bis 300 °C aufbläht.

Für das obige Verfahren kommen generell Flugstäube oder Flugaschen in Frage, die bei der Silicium- oder Ferrosiliciumherstellung anfallen und 89 bis 98 Gewichtsprozent $SiO_2$ enthalten. Eine typische Zusammensetzung ist nachstehend angegeben :

$SiO_2$ : 89-98
SiC : 0,2-0,7
C : 0,2-2,5
$Fe_2O_3$ : 0,05-2,5
$Al_2O_3$ : 0,1-1,5
$TiO_2$ : 0,01-0,05
CaO : 0,07-0,8
MgO : 0,2-1,5
$Na_2O$ : 0,1-1
$K_2O$ : 0,3-2,2
P : 0,03-0,1
S : 0,03-0,5

Als Alkalisilikatlösungen kommen handelsübliche Produkte mit Molverhältnissen von $Na_2O$ : $SiO_2$ wie 1 : 2 bis 1 : 4 in Frage. Insbesondere werden Natriumsilikatlösungen, die als Wasserglas 37/40 bezeichnet werden und ein Molverhältnis von $Na_2O$ : $SiO_2$ wie 1 : 3,46 und einen Feststoffgehalt von 34,9 Gewichtsprozent besitzen, verwendet.

Es hat sich gezeigt, daß bei der Zusammensetzung des Gemisches gemäß der Formel I besonders technisch brauchbare Produkte erhalten werden, wenn n den Wert 5 bis 6 und m im Bereich der Werte 31 bis 43 bei Verwendung von Alkalisilikat liegt, wobei Me Natrium bedeutet.

Die zuzusetzende Menge Wasser ergibt sich aus den in der Formel I angeführten Grenzen, sofern nicht in der verwendeten Alkalisilikatlösung entsprechende Wassermengen von vornherein vorhanden sein sollten. Entsprechendes gilt auch für Natriumhydroxid- und Kaliumhydroxidlösungen. Gewünschtenfalls können auch Gemische aus Alkalisilikat- und Alkalihydroxidlösungen eingesetzt werden. Es hat sich im übrigen gezeigt, daß die weitere Zugabe von Wasser zu einer verbesserten homogenen Struktur und gegebenenfalls auch zur Verbesserung der Festigkeit der Endprodukte beiträgt.

Das Gemisch wird durch Erwärmen auf Temperaturen bis zu 100 °C zum Erhärten gebracht. Dabei ist es vorteilhaft, im Vakuum zu arbeiten. Insbesondere kommt ein technisch leicht herstellbares Vakuum von etwa 20 bis 100 Torr in Betracht. Die Trockendauer im Vakuum beträgt im allgemeinen 2 bis 4 Stunden. Es erfolgt danach eine vollständige Abkühlung bei Raumtemperatur.

Die auf die oben beschriebene Weise erhaltenen festen Produkte werden nach vollständiger Abkühlung mit Hilfe einer Zahnscheibenmühle oder ähnlicher Einrichtungen zerkleinert. Bei der Zerkleinerung wird angestrebt, möglichst gleich große Teilchen zu erhalten. Die Teilchen mit einer Größe unter 1,6 mm und über 3,15 mm werden abgesiebt. Eine Vorgranulierung ist nicht erforderlich. Anschließend erfolgt das Aufblähen durch Erhitzen auf Temperaturen von 150 bis 300 °C, vorzugsweise 200 bis 300 °C.

Die Aufblähdauer bei den genannten Temperaturen liegt zwischen 10 Minuten und einer Stunde, vorzugsweise jedoch zwischen 25 und 35 Minuten.

Der Vorteil bei der beschriebenen Arbeitsweise liegt unter anderem darin, daß man für das Verfahren nur zwei Komponenten (Alkalisilikat/Flugstaub) ohne spezielle Zusätze, wie Härter oder Treibmittel, benötigt und auch eine spezielle Vorgranulierung, wie sie vorgeschlagen worden ist, nicht erforderlich wird. Weiterhin ist es vorteilhaft, daß die Aufblähdauer nicht nur kurz gehalten werden, sondern auch bei relativ niedrigen Temperaturen durchgeführt werden kann. Schließlich besteht auch die Möglichkeit, ohne Alkalisilikate zu arbeiten, wenn statt dessen eine der Formel I entsprechende Menge Natrium- oder Kaliumhydroxide und Flugstaub sowie Wasser Verwendung finden. Weiterhin gestattet es die beschriebene Arbeitsweise, Produkte mit Schüttdichten, die etwa zwischen 0,1 bis 0,7 g/cm$^3$ liegen und einen Korndurchmesser von etwa 1,2 bis 5 mm aufweisen, herzustellen. Es fallen nicht nur Granulate mit einer guten Festigkeit und Volumenstabilität an, sondern es können auch kugelförmige Granulate erhalten werden. Besonders gute kugelförmige Granulate entstehen, wenn der sogenannte Restwassergehalt des Rohmaterials nach dem Härtungsbeziehungsweise Zerkleinerungsvorgang vorzugsweise 25 bis 35 Gewichtsprozent beträgt.

Die Schüttdichten sind im übrigen abhängig von dem Trocknungsprozeß, der Aufblähdauer und der dabei angewendeten Temperatur.

Die nach dem beschriebenen Verfahren herstellbaren Produkte können insbesondere als Isoliermaterial für solche Zwecke Verwendung finden, bei denen unbrennbares, leichtes Material erwünscht ist. Neben der Verwendung als Verpackungsmaterialien können auch entsprechende Formkörper und Platten für Isolationszwecke hergestellt werden.

## Beispiele

In den Beispielen wird der Anmeldungsgegenstand nochmals erläutert, ohne daß er auf diese Beispiele beschränkt ist. Dabei werden jeweils Gemische aus den in den Beispielen aufgelisteten Substanzen in dem angegebenen Mischungsverhältnis hergestellt. Die Gemische werden unter den angegebenen Bedingungen in V4A Edelstahl-Formen (Abmessungen 350 × 250 × 40 mm) gehärtet beziehungsweise aufgebläht. Die dabei erhaltenen Endprodukte sind von kugelförmiger Gestalt und weisen die jeweils angegebene Dichte und den in Klammern angegebenen Korndurchmesser auf.

### Beispiel 1

Mischungsverhältnis ($SiO_2$ : $Na_2O$) 5 : 1
800 g Wasserglas 37/40
98 g Flugstaub 97 % $SiO_2$
89,8 g Wasser
Harten : 4 h, 100 °C Vakuumtrockenschrank
Aufblähen : 30′, 200 °C Ofen
Dichte : 0,15-0,19 g/cm$^3$ (größer als 1,2 mm ∅)

### Beispiel 2

Mischungsverhältnis ($SiO_2$ : $Na_2O$) 6 : 1
800 g Wasserglas 37/40
174 g Flugstaub 90 % $SiO_2$

97,4 g Wasser
Härten : 4 h, 100 °C Vakuum (50 Torr)
Aufblähen 30', 200 °C Ofen
Dichte : 0,17 g/cm³ (größer als 3,15 mm ∅)
0,28 g/cm³ (2 bis 3 mm ∅)

Beispiel 3

Mischungsverhältnis ($SiO_2$ : $Na_2O$) 6 : 1
800 g Wasserglas 37/40
167 g Flugstaub 97 % $SiO_2$
242 g Wasser
Härten : 4 h, 100 °C Vakuumtrockenschrank
Aufblähen : 30', 200 °C Ofen
Dichte : 0,19 g/cm³ (größer als 3,15 mm ∅)
0,22 g/cm³ (2 bis 3 mm ∅)

Beispiel 4

Mischungsverhältnis ($SiO_2$ : $Na_2O$) 6 : 1
800 g Wasserglas 37/40
174 g Flugstaub 90 % $SiO_2$
97,4 g Wasser
Härten : 2 h, 100 °C Vakuumtrockenschrank
Aufblähen : 30', 200 °C Ofen
Dichte : 0,19 g/cm³ (größer als 3,15 mm ∅)
0,28 g/cm³ (2 bis 3 mm Ø)

Beispiel 5

Mischungsverhältnis ($SiO_2$ : $Na_2O$) 6 : 1
800 g Wasserglas 37/40
174 g Flugstaub 90 % $SiO_2$
49 g Wasser
Härten : 2 h, 100 °C Vakuumtrockenschrank
Aufblähen : 30', 200 °C Ofen
Dichte : 0,24 g/cm³ (größer als 3,15 mm ∅)

Beispiel 6

Mischungsverhältnis ($SiO_2$ : $Na_2O$) 6 : 1
800 g Wasserglas 37/40
174 g Flugstaub 90 % $SiO_2$
146 g Wasser
Härten : 2 h, 100 °C Vakuum (50 Torr)
Aufblähen : 30', 200 °C Ofen
Dichte : 0,24 g/cm³ (größer als 3,15 mm ∅)

Beispiel 7

Mischungsverhältnis ($SiO_2$ : $Na_2O$) 6 : 1
800 g Wasserglas 37/40
97,4 g Wasser
174 g Flugstaub 90 % $SiO_2$
Härten : 2 h, 100 °C Vakuumtrockenschrank
Aufblähen : 30', 250 bis 300 °C Ofen
Dichte : 0,13 g/cm³ (größer als 3,15 mm ∅)

Beispiel 8

Mischungsverhältnis ($SiO_2$ : $Na_2O$) 6 : 1
460 g Flugstaub 90 % $SiO_2$
183,7 g NaOH (50 %ig)
334 g Wasser
Härten : 1 h, 100 °C Trockenschrank

Aufblähen : 30′, 150 °C Ofen
Dichte : 0,35 g/cm³ (größer als 3,15 mm ∅)
0,52 g/cm³ (2 bis 3 mm ∅)

Beispiel 9

Mischungsverhältnis ($SiO_2$ : $Na_2O$) 8 : 1
460 g Flugstaub 90 % $SiO_2$
137,8 g NaOH (50 %ig)
334 g Wasser
Härten : 1 h, 100 °C Trockenschrank
Aufblähen : 30′, 150 °C Ofen
Dichte : 0,62 (größer als 3,15 mm ∅)

Beispiel 10

Mischungsverhältnis ($SiO_2$ : $Na_2O$) 6 : 1
460 g Flugstaub 90 % $SiO_2$
183,7 g NaOH (50 %ig)
334 g Wasser
Härten : 1 h, 100 °C Trockenschrank
Aufblähen : 30′, 200 °C Ofen
Dichte : 0,17 g/cm³ (größer als 3,15 mm ∅)
0,22 g/cm³ (2 bis 3 mm ∅)

Beispiel 11

Mischungsverhältnis ($SiO_2$ : $K_2O$) 6 : 1
800 g Wasserglas K 35
154 g Flugstaub 90 % $SiO_2$
95,4 g Wasser
Härten : 3 h, 100 °C Vakuumtrockenschrank
Aufblähen : 30′, 250 °C Ofen
Dichte : 0,17 g/cm³ (größer als 3,15 mm ∅)
0,20 g/cm³ (2 bis 3 mm ∅)

Beispiel 12

Mischungsverhältnis ($SiO_2$ : $K_2O$) 6 : 1
460 g Flugstaub 90 % $SiO_2$
257,5 g KOH (50 %ig)
334 g Wasser
Härten : 1 h, 100 °C Trockenschrank
Aufblähen : 30′, 250 bis 300 °C Ofen
Dichte : 0,13 g/cm³ (größer als 3,15 mm ∅)
0,16 g/cm³ (2 bis 3 mm ∅)

**Patentansprüche**

1. Verfahren zur Herstellung homogener Schaumglasgranulate durch thermische Behandlung von Flugstäuben bzw. Flugaschen, die bei der Silicium- oder Ferrosiliciumherstellung anfallen, sowie wäßrigen alkalischen Lösungen, gegebenenfalls wäßrigen Alkalimetallsilikatlösungen, dadurch gekennzeichnet, daß man

a) ein Gemisch, bestehend aus Flugstaub oder Flugasche mit einem $SiO_2$-Gehalt von 89 bis 98 Gew.-%, einer wäßrigen Alkalimetallsilikat- und/oder einer wäßrigen Alkalimetallhydroxid-Lösung und gegebenenfalls Wasser, herstellt,

b) wobei die molare Zusammensetzung des Gemisches der allgemeinen Formel I

$$(Me_2O) \cdot (SiO_2)_n \cdot (H_2O)_m \qquad (I)$$

entspricht, in welcher Me = Natrium oder Kalium, n = 5 bis 8 und m = 22 bis 45 bedeuten,

c) das Gemisch durch Erhitzen auf Temperaturen bis 100 °C härtet,

d) die erkaltete, erhärtete Masse zerkleinert und Teilchen einer Größe unter 1,6 mm sowie über 3,15 mm absiebt und

e) anschließend das erhaltene Produkt durch erneutes Erhitzen auf Temperaturen im Bereich von 150 bis 300 °C aufbläht.

2. Verfahren nach Anspruch 1, dadurch gekennzeichnet, daß man in Stufe a bzw. b eine Alkalimetallsilikat-Lösung verwendet und ein Gemisch gemäß Formel I herstellt, in welcher Me = Natrium, n = 5 bis 6 und m = 31 bis 43 bedeuten.

3. Verfahren nach Anspruch 1, dadurch gekennzeichnet, daß man in Stufe c das Erhitzen des Gemisches im Vakuum vornimmt.

4. Verfahren nach den Ansprüchen 1 bis 3, dadurch gekennzeichnet, daß man in Stufe e die Produkte auf Temperaturen im Bereich von 200 bis 300 °C erhitzt.

**Claims**

1. A process for the production of homogeneous foam glass granulates by heat treatment of fine dust or light ashes accumulating in the production of silicon or ferrosilicon and aqueous alkaline solutions, optionally aqueous alkali metal silicate solutions, characterized in that

a) a mixture consisting of fine dust or light ashes containing 89 to 98 % by weight $SiO_2$, an aqueous alkali metal silicate solution and/or an aqueous alkali metal hydroxide solution and optionally water is prepared,

b) the molar composition of the mixture corresponding to the following general formula

$$(Me_2O) \cdot (SiO_2)_n \cdot (H_2O)_m \qquad (I)$$

in which Me = sodium or potassium, n = 5 to 8 and m = 22 to 45,

c) the mixture is hardened by heating to temperatures of up to 100 °C,

d) the cooled, hardened mass is size-reduced and particles under 1.6 mm and over 3.15 mm in size are sifted off and

e) the product obtained is then expanded by reheating to temperatures of from 150 to 300 °C.

2. A process as claimed in Claim 1, characterized in that an alkali metal silicate solution is used in steps a and b and a mixture corresponding to formula I, in which Me = sodium, n = 5 to 6 and m = 31 to 43, is prepared.

3. A process as claimed in Claim 1, characterized in that in step c the mixture is heated in vacuo.

4. A process as claimed in Claims 1 to 3, characterized in that in step e the products are heated to temperatures in the range from 200 to 300 °C.

**Revendications**

1. Procédé de fabrication de granulats homogènes en verre mousse par traitement thermique de poussières volantes ou de cendres volantes que l'on rencontre dans la fabrication du silicium ou du ferrosilicium, de même que de solutions alcalines aqueuses, le cas échéant de solutions aqueuses de silicates de métaux alcalins, caractérisé en ce que

a) on prépare un mélange consistant en de la poussière volante ou de la cendre volante ayant une teneur en $SiO_2$ de 89 à 98 % en poids, en une solution aqueuse de silicate de métal alcalin et/ou en une solution aqueuse d'hydroxyde de métal alcalin, éventuellement avec de l'eau,

b) la composition molaire du mélange correspondant à la formule générale I

$$(Me_2O) \cdot (SiO_2)_n \cdot (H_2O)_m \qquad (I)$$

dans laquelle Me = du sodium ou du potassium, n = 5 à 8 et m = 22 à 45,

c) on durcit le mélange par chauffage à des températures allant jusqu'à 100 °C,

d) on concasse la masse durcie refroidie et l'on sépare par tamisage les particules d'une dimension inférieure à 1,6 mm de même que supérieure à 3,15 mm et

e) on fait ensuite gonfler le produit obtenu par un nouveau chauffage à des températures dans l'intervalle de 150 à 300 °C.

2. Procédé selon la revendication 1, caractérisé en ce qu'on utilise au stade a ou b une solution de silicate de métal alcalin et prépare un mélange selon la formule I dans laquelle Me = du sodium, n = 5 à 6 et m = 31 à 43.

3. Procédé selon la revendication 1, caractérisé en ce que dans le stade c on effectue le chauffage du mélange sous vide.

4. Procédé selon les revendications 1 à 3, caractérisé en ce qu'au stade e on chauffe les produits à des températures dans l'intervalle de 200 à 300 °C.